# EUROPEAN PATENT SPECIFICATION

(11) **EP 0 736 853 B1**
(45) Date of publication and mention of the grant of the patent: **06.03.2002**
(21) Application number: 96105351.9
(22) Date of filing: 03.04.1996
(51) Int. Cl.: G08G 1/0968, G01C 21/20

(54) **Vehicle navigation device**
Fahrzeugnavigationsanlage
Dispositif de navigation pour véhicule

(30) Priority: 04.04.1995 JP 7859295
(43) Date of publication of application: 09.10.1996
(73) Proprietor: AISIN AW CO., LTD., Anjo-shi Aichi 444-1192 (JP)
(72) Inventor: Kato, Kiyohide, Chiryu-si, Aichi 472 (JP); Hashimoto, Koji, Kariya-shi, Aichi 448 (JP)
(74) Representative: VOSSIUS & PARTNER

(56) References cited:
- EP-A- 0 323 245
- EP-A- 0 560 987
- EP-A- 0 580 166
- WO-A-91/18345
- US-A- 5 177 685

## Description

The present invention relates to a vehicle navigation device that guides a driver on a route with a voice or the like in accordance with a preset route.

Up to now, there have been proposed a variety of vehicle navigation devices. For example, one type of the devices notifies a driver of an advance direction of a vehicle at a crossing with a voice or the combination of a voice and a display, with the detection that the vehicle enters within a specified area of the crossing (for example, Published Unexamined Patent Application No. S60 - 202307). Another type notifies a driver of the advance direction thereof at the time of traveling at a predetermined distance after passing the crossing (for example, Published Unexamined Patent Application No. S63 - 211499). Yet another type generates a request signal for a route guidance in response to a request from the driver to voice - output route guidance information corresponding to the current position of the vehicle.

By the way, the general vehicle navigation device that voice - outputs route guidance information in response to the request from the driver is so designed that voice data is compressed and stored in a CD - ROM, and a voice data RAM (voice buffer) and an ADPCM (adaptive differential pulse code modulation) decoder that converts a digital signal into an analog signal are provided between a CD - ROM driver and a voice output device. Also, the voice data relating to a crossing or a diverging point is divided for each phrase and stored. Upon selecting the phrase of the voice data relating to the crossing or diverging point, each phrase is read out from the CD-ROM and temporarily stored in the voice buffer, and when there is a request for voice output, the decoder converts compressed data into a voice signal before outputting them. Also, in view of the frequency of use of phrases, the navigation device is so designed that the phrases frequently used are always stored in the buffer, but the phrases rarely used are cleared from the buffer after being used.

However, the above - mentioned vehicle navigation device having the voice data RAM (voice buffer) and the ADPCM decoder suffers from such a problem that the costs rise because of the provision of the voice data RAM (voice buffer) and the ADPCM decoder. Also, there has been proposed a system in which the voice buffer and the ADPCM decoder are omitted from the structure, and when receiving a voice guidance request, access is gained directly to a CD - ROM to read out a voice signal. However, because guidance information relating to the crossing and the diverging point, which is completed in one composition, is stored in the CD - ROM, there arises such a problem that the quantity of storage of the voice signals becomes swelled Furthermore, even in the case where the voice data is compressed and stored in the CD - ROM, a large number of compositions cannot be completely stored therein because of a limited capacity, which leads to a problem that an appropriate voice guidance cannot be executed.

EP-A-0 580 166 describes a vehicle navigation device that guides a driver on a route with a voice, wherein voice data are processed by analog-digital conversion and digital-analog conversion. The navigation device works as follows: When the vehicle approaches a crossing, where the vehicle has to make a turn, the display on the screen is switched and the crossing name and the distance to the crossing are displayed on the screen. The route guiding unit instructs a voice control unit in the form of an amplifier to generate a voice corresponding to the route guidance at the crossing simultaneously with this change of display. The voice control unit reads from a voice storage unit information stored therein as digital data, and the digital data is converted into analog signals to activate a speaker.

It is an object of the present invention to provide a vehicle navigation device that guides a driver on a route with a voice, which comprises a simplified structure saving costs.

The object is achieved by the features of the claims.

The present invention provides a vehicle navigation device that guides a driver on a route with a voice or the like in accordance with a preset route, which comprises :
storage means for storing the data necessary for conducting navigation, such as the data relating to a map or route guidance voice data ;
read means for reading out the route guidance voice data from said storage means ;
voice output means for outputting the route guidance voice data read out by said read means directly as a guidance voice;
input means for inputting information as to setting or instruction of the route guidance :
current position detection means for detecting a current position of the vehicle ;
control means including route setting means for setting a route from the current position to a destination, route storage means for temporarily storing a route that has been set, and voice data edition means for editing the combination of phrases of the route guidance voice data relating to a crossing, a diverging point, etc., on the basis of the route stored in said route storage means, said control means controlling said read means so that said read means sequentially reads out the voice data from said storage means and outputs the voice data that have been read out at a predetermined distance before a guidance point on the basis of said combination of phrases.

The control means controls the read means so as to judge the completion of reproduction for each phrase to sequentially read out the voice data. The control means also inhibits the execution of another processing until the output of the voice data has been completed when another processing execution instruction is given to the control means while the route guidance voice data is being outputted, or inhibits the voice data from being read out when another processing is being executed in such a situation where the voice data should be read out and outputted at a predetermined distance before a guidance point, and reads out and outputs the voice data after judging the completion of the other processing.

Furthermore, the above mentioned voice data to be read out and outputted after the completion of said other processing may be of the combination of phrases edited by the voice data edition means in advance, the voice data reedited by guidance voice alteration means, or the voice data reedited on the basis of the current position of the vehicle at the time of completion of another processing. The above mentioned route guidance voice data is the data to which priority is given, and the guidance voice alteration means alters the data to the route guidance voice data consisting of phrases high in priority.

In the vehicle navigation device in accordance with the present invention, there are provided the storage means for storing the data necessary for conducting navigation, such as the data relating to a map or route guidance voice data : the read means for reading out the route guidance voice data from said storage means ; the voice output means for outputting the route guidance voice data read out by said read means directly as guidance voice ; the input means for inputting information as to setting or instruction of the route guidance ; the current position detection means for detecting a current position of the vehicle ; the control means including route setting means for setting a route from the current position to a destination, route storage means for temporarily storing a set route, and voice data edition means for editing the combination of phrases of the route guidance voice data relating to a crossing, a diverging point, etc., on the basis of the route stored in said route storage means, said control means controlling said read means so that said read means sequentially reads out the voice data from said storage means and outputs the read voice data at a predetermined distance before a guidance point on the basis of said combination of phrases. As a result, the voice signal can be directly read out and outputted from the CD - ROM that stores not only the voice signal but also other data therein.

Furthermore, the control means controls the read means so as to judge the completion of reproduction for each phrase to sequentially read out the voice data. The control means also inhibits the execution of another processing until the output of the voice data has been completed when another processing execution instruction is given to the control means while the route guidance voice data is being outputted or inhibits the voice data from being road out when another processing is being executed in such a situation where the voice data should be read out and outputted at a predetermined distance before a guidance point, and reads out and outputs the voice data after judging the completion of the other processing. As a result, a guidance voice can be read out from the read means and outputted from the voice output means at it is. Thus, the guidance voice is smoothly outputted without any interruption of guidance. Also, if the same recording medium is used, the quantity of the data stored can be reduced more than what is stored in a composition unit, and the structure can be simplified by omission of a voice data RAM (voice buffer) and an ADPCM decoder.

Furthermore, the voice data to be read out and outputted after the completion of said other processing may be of the combination of phrases edited by the voice data edition means in advance, the voice data reedited by guidance voice alteration means, or the voice data reedited on the basis of the current position of the vehicle at the time of completion of the other processing. The route guidance voice data is the data to which priority is given, and the guidance voice alteration means alters the data to route guidance voice data consisting of phrases high in priority. As a result, a voice guidance can be executed without any unnatural feeling.

The above and other objects and features of the present invention will be more apparent from the following description taken in conjunction with the accompanying drawings.
FIG. 1 is a block diagram showing a vehicle navigation device in accordance with one embodiment of the present invention ;
FIGs. 2 and 3 are illustrations showing an example of the combination of the storage contents of voice data with phrases ;
FIG. 4 is a flow chart for explaining an example of a voice guidance processing for a crossing and a diverging point ;
FIG. 5 is a flow chart for explaining an example of a processing for enlarging/reducing a map by keyboarding ;
FIG. 6 is a flow chart for explaining a vehicle navigation device in accordance with another embodiment of the present invention ;
FIG. 7 is a block diagram showing a structural example of the entire system of the vehicle navigation device to which the present invention is applied ; and
FIG. 8 is a flow chart for explaining an example of the operating flow of the entire system of the vehicle navigation device.

A description will be given in more detail of embodiments of the present invention with reference to the accompanying drawings.

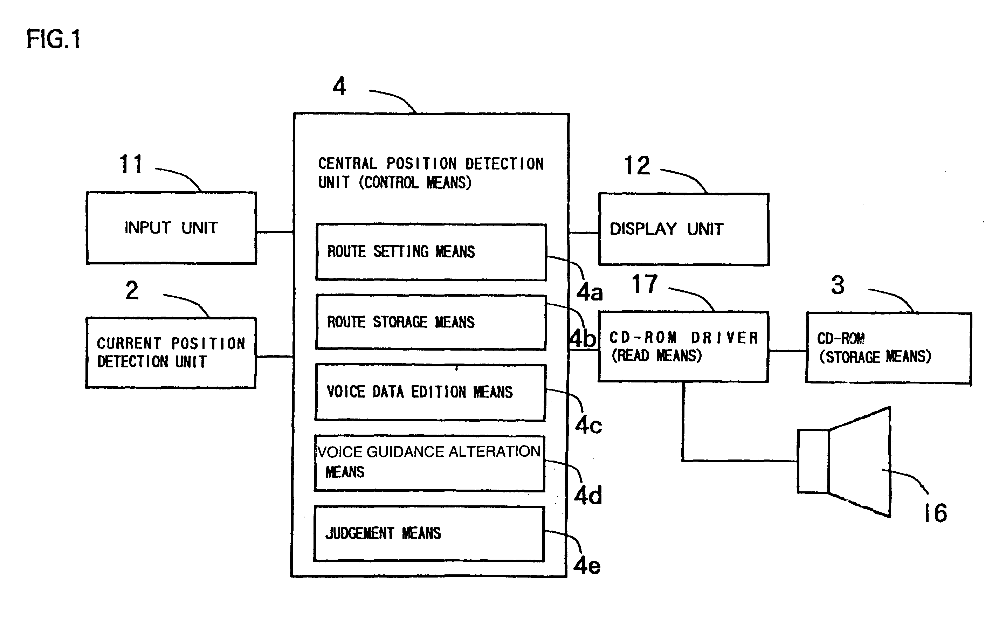

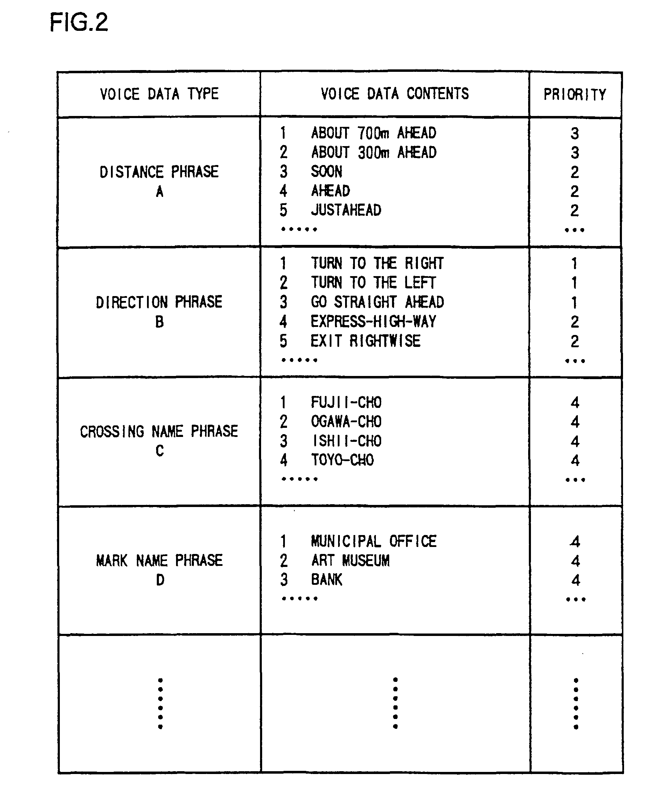

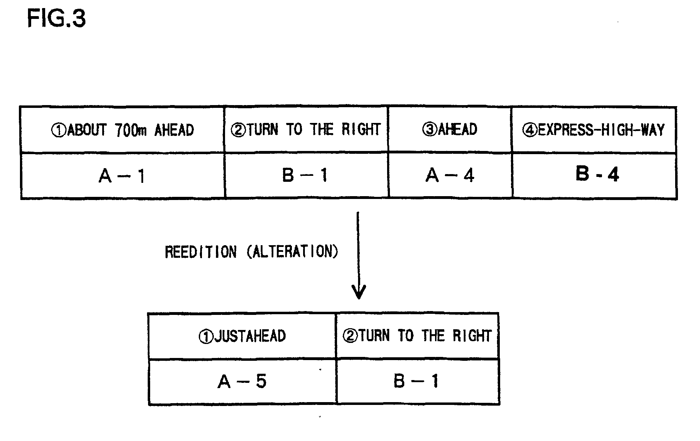

FIG. 1 is a block diagram showing a vehicle navigation device in accordance with one embodiment of the present invention, and FIGs. 2 and 3 are illustrations showing an example of the combination of the storage contents of voice data with phrases. In the figures, reference numeral 2 denotes a current position detection unit; 3, a CD - ROM ; 4, a central processing unit 4a, a route setting means ; 4b, a route storage means ; 4c, a voice data edition means ; 4d, a guidance voice alteration means 4e, a judgement means ; 11, an input unit 12, a display unit 16, a speaker; and 17, a CD - ROM driver.

The CD - ROM 3 is a memory means for storing the data necessary for conducting navigation, such as the data for setting a destination or a starting location, the data for retrieving a route, the data relating to a display map, or the voice data for a route guidance, and the route guidance voice data is divided for each phrase and stored. The CD - ROM driver 17 is a read means for reading out the route guidance voice data from the CD - ROM 3. The speaker 16 is a voice output means for outputting the route guidance voice data read out by the CD - ROM driver 17 directly as a guidance voice. The display unit 12 is so designed as to display a position setting screen for setting a position such as a map or a destination, a position registration screen and other route guidance information. The input unit 11 is an input means for inputting information as to an instruction of position setting or a guide start for a route guidance, and as to an instruction of the enlargement/reduction of a map displayed on the display unit 12, or the like. The current position detection unit 2 is so designed as to detect a current position of the vehicle. The central processing unit 4 is a control means for controlling the entire system which includes : a route setting means 4a for setting a route from the current position to a destination by retrieving a route when the destination has been set ; a route storage means 4b for temporarily storing a route which has been set by the route setting means, and a voice data edition means 4c for editing the route guidance voice data ; a guide voice alteration means 4d for altering the route guidance voice data for reediting ; and a judgement means 4e for judging the completion of another processing in the case where the reading of voice data is made in a standby state because the other processing is being executed when receiving a request for reading voice data. The control means controls the CD - ROM driver 17 so as to read out from the CD - ROM 3 the route guidance voice data edited by the voice data edition means 4d and to output it from the speaker 16 as the guidance voice. Hence. the phrases of route guidance voice data are edited at the first predetermined distance before a guidance point, for example, such as a crossing or a diverging point, on the basis of the current position detected by the current position detection unit 2 and the route stored in the CD - ROM 3, and thereafter the route guidance voice data is sequentially read out and outputted at the second predetermined distance before the guidance point on the basis of the combination of the edited phrases of voice data.

The guide voice alteration means 4d is so designed that, in the case where the guidance voice cannot be outputted at a predetermined timing because the CD - ROM driver 17 is reading a map or other route guidance data with the result that the reading of the route guidance voice data edited by the voice data edition means 4c is delayed, the guidance voice alteration means 4d alters the route guidance voice data which has already been edited to short data of a minimum quantity of information, and reads it out from the CD - ROM 3 after the judgement means 4e judges that the reading of other data has been completed. For that reason, the route guidance voice data stored in the CD - ROM 3 and outputted as the guidance voice is divided into respective phrases of a distance phrase, a direction phrase, a crossing name phrase, a mark name phrase, etc., as shown in FIG. 2, and priority or weight is given to the respective voice data. Then, in the case where the guidance voice alteration means 4d alters the route guidance voice data, it alters the voice data in such a manner that only the route guidance voice data consisting of phrases high in priority is outputted. For example, it is assumed that the combination of phrases edited as shown in FIG. 3 is "about 700 m ahead, turn to the right, then, a speedway". Then, if reedition is conducted with "1" which is high in priority, the combination of those phrases becomes 'ahead, turn to the right". In case of conducting such a processing, the phrases of route guidance voice data are edited at the first predetermined distance (>700 m) before the guidance point such as a crossing or a diverging point, and thereafter the route guidance voice data is sequentially read out and outputted on the basis of the combination of the phrases edited at the second predetermined distance (= 700 m) before the guidance point. Then, in the case where the vehicle runs to a third predetermined distance (for example, 100 m) before and in the vicinity of the guidance point while the combination of the phrases edited at the second predetermined distance (= 700 m) before the guidance point cannot be read out, reedition is conducted. It is needless to say that, after a prospected time when the vehicle passes the guidance point is calculated on the basis of a vehicle speed and a remaining distance, a timing of outputting the guidance voice may be set on the basis of the prospected time so that the timing is not missed. Also, although the above - mentioned embodiment is so designed that the phrases of route guidance voice data are edited at a predetermined distance before the guidance point, the phrases may be edited in advance after setting a route.

Subsequently, a description will be given of an example of a flow for processing the above - mentioned vehicle navigation device in accordance with the present invention.

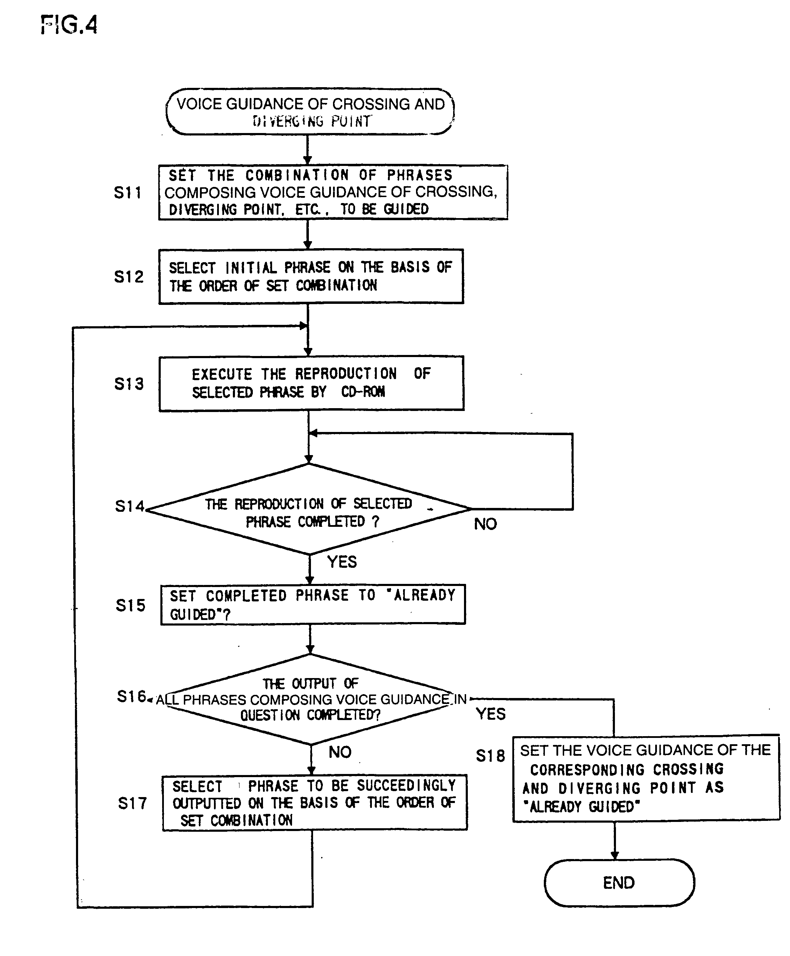

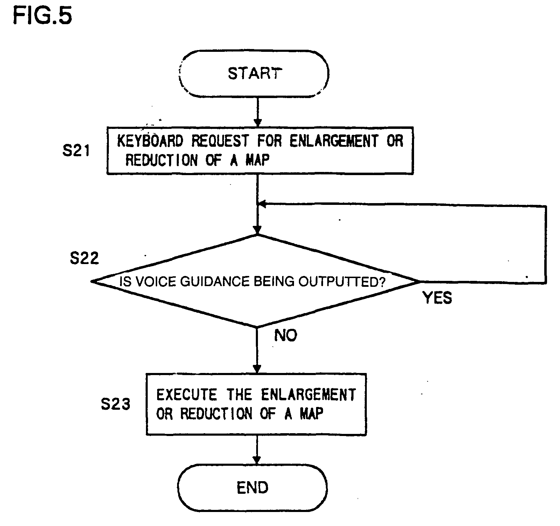

FIG. 4 is a flow chart for explaining an example of a voice guidance processing for a crossing and a diverging point. FIG. 5 is a flow chart for explaining an example of a processing for enlarging/reducing a map by keyboarding.

In the vehicle navigation device of the present invention, in the control means as shown in FIG. 4, when the combination of the phrases composing a guidance composition for a crossing or a diverging point, which is an guidance object, is set (Step S11), an initial phrase is selected on the basis of the order of the combination which has been set (Step S12), and a phrase selected by the CD - ROM driver 17 is read out from the CD - ROM 3, thus permitting the speaker 16 to execute reproduction (Step S13). After the reproduction of the selected phrase has been completed (Step S14), the reproduced phrase is set to "already guided" (Step S15). Then, it is checked up whether the output of all phrases of the guidance voice in question has been completed, or not (Step S16). If it is not completed, a phrase to be succeedingly outputted is selected on the basis of the order of the set combination (Step S17), and control operation returns to Step S13. The same processing is repeatedly executed until outputting all the phrases of the guidance voice in question has been completed. When the output of all the phrases has been completed, the voice guidance of the corresponding crossing or diverging point is set to "already guided" (Step S18).

As described above, according to the present invention, access is gained directly to the CD - ROM 3 in the order of the combination of phrases composing the guidance composition to read out a voice signal, so that the guidance composition is read out and outputted. Furthermore, in this case it is judged whether the output of each phrase has been completed, or not, and if its completion is judged, a succeeding phrase is then outputted.

Similarly, it is judged whether the output of phrases for each guidance composition has been completed, or not, and if its completion is judged, a succeeding processing, that is, a processing for accessing to the CD - ROM 3 is executed. In the system in which access is gained directly to the CD - ROM to read out a guidance voice, the guidance voice can be smoothly outputted. Also, because a processing is advanced in such a manner that access is gained to a succeeding CD - ROM phrase after it is judged that the guidance voice has already been outputted, the interruption of the guidance is eliminated.

Subsequently, a description will be given of a processing when a request for the enlargement/reduction of a map is keyboarded while a voice guidance is being outputted. As shown in FIG. 5, in the case where a driver has keyboarded a request for the enlargement/reduction of the map in order to enlarge or reduce the map displayed on a screen of the display unit (Step S21), it is judged whether a voice guidance is being outputted, or not (Step S22). If the voice guide is being outputted, the request is in a waiting state. If it is judged that the voice guidance has been completed, that is, if it is judged that a guidance composition composed of the combination of phrases has been completely outputted as "already guided", the "enlargement" or " reduction" of the map is executed on the basis of the request keyboarded (Step S23). In this way, when a request is keyboarded while a voice guide is being outputted, the request becomes in a waiting state, and after the output of the voice guidance has been completed, a processing is executed in accordance with the keyboarded request. In other words, the execution of another processing in accordance with a request keyboarded is inhibited. A processing when a request for executing another processing is conducted while a voice guidance is being outputted was described using a case in which a request for "enlargement" or "reduction" of a map is keyboarded. The above - mentioned processing is also applied to, for example, a case in which a scroll of a map screen is instructed, a change - over from a map screen to another information screen is instructed, or the like. Also, in the above - mentioned embodiment, when the execution of another processing is requested while a voice guidance is being outputted, the request is held, and after it is judged that the guidance voice has already been outputted, the processing as requested is executed. Alternatively, the device may be held in a state where operation such as keyboarding cannot be made while the guidance voice is being outputted. For example, in case of a display unit having a touch panel in which a key display section on the touch panel is depressed for keyboarding, the color of the key display section in the input disenable state may be changed from that in the input enable state or darkened, or the lighting of the key display section may be switched off.

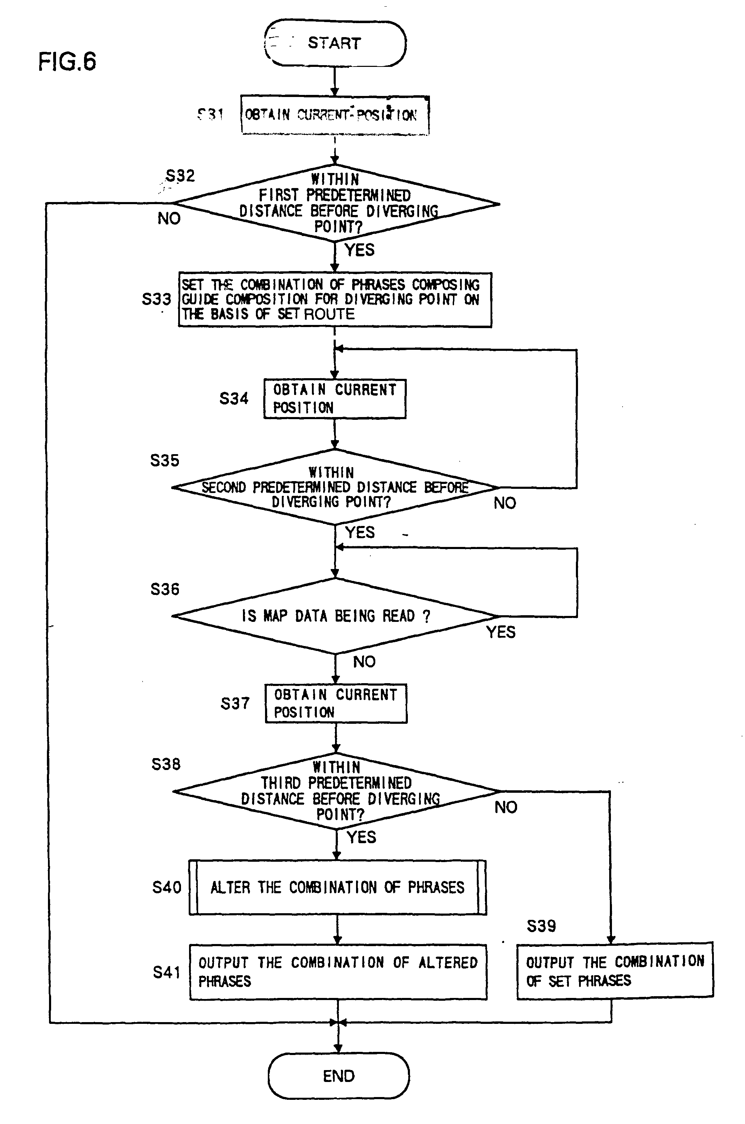

In the system in which a voice signal is directly read and outputted at a timing when the voice signal is used for guidance and outputted as in the present invention, the voice data cannot be read while other data is being read by accessing to the CD - ROM. For that reason, the system suffers from an inconvenience such that a timing when the voice data is read is shifted, causing the guidance voice to be outputted at an inappropriate timing. Therefore, in the case where the timing when the voice data is read is shifted, if the voice data is preserved by phrases so that the combination of the voice guidance is altered, flexibility can be provided. FIG. 6 is a flow chart for explaining a vehicle navigation device in accordance with another embodiment of the present invention.

In the case where the guidance voice cannot be outputted because the map data is being read, a processing for conducting control operation so that the output of the guidance voice starts after the reading of map data has been completed is executed as stated below. As shown in FIG. 6, if a current position is first obtained (Step S31), it is checked whether the vehicle is within a first predetermined distance before a diverging point (Step S32). If it is not within the first predetermined distance, the control operation is completed as it is. If it is within the first predetermined distance, the combination of phrases composing a guidance composition for the diverging point is set on the basis of a route which has been set (Step S33). The first predetermined distance is of a timing at which the combination of phrases is edited, which comes before a timing (the second predetermined distance) at which the guidance voice is outputted. Subsequently, a current position is obtained (Step S34), and it is checked whether the vehicle is within the second predetermined distance before the diverging point, or not (Step S35). If it comes within the second predetermined distance, it is checked whether another processing, for example, the reading of map data is being executed, or not (Step S36). If the map data is being read (another processing is being executed), the control operation is in the waiting state until the reading is completed, and after the reading has been completed, a current position at that time is obtained (Step S37), and it is checked whether the vehicle is within a third predetermined distance before the diverging point, or not (Step S38). The third predetermined distance is a distance which is judged to be inappropriate as a timing when the combination of phrases edited at the time of the first predetermined distance is outputted as a guidance voice. In other words, it is a distance from which it is judged that the vehicle extremely approaches the guidance point. A relationship of (first predetermined distance) > (second predetermined distance) > (third predetermined distance) is satisfied. If the vehicle is not within the third predetermined distance, the combination of phrases set in Step S33 is outputted as a guidance voice (Step S39). In the case where the vehicle comes within the third predetermined distance, the combination of phrases is altered (Step S40), and the combination of phrases thus altered is outputted as the guidance voice (Step S41).

As described above, where the guidance voice is outputted after map data has been read, there is a case in which the combination of phrases which has been preset is inappropriate. Therefore, in the case where the current position at the time when the reading of map data has been completed remarkably approaches diverging point which is an object for guidance, a processing for altering the combination of phrases composing a guidance is executed. The ways of altering the combination of phrases are that a phrase relating to a distance is omitted, that a distance phrase is altered in accordance with a remaining distance, that the combination of phrases composing a guidance voice is simplified as shown in FIG. 3 since there is a case where the distance from the vehicle to the diverging point is very shortened, that a guidance voice is canceled depending on a situation, etc. With the alteration of the combination of phrases composing the guidance voice, an unnatural guidance voice can be prevented from being outputted, and even though the vehicle approaches the guidance point, the combination of phrases composing a short guide voice enables an accurate guidance to be executed. Also, with the cancellation of the guidance voice, such a problem that the driver cannot comply with an instruction of the guidance voice or is bewildered because the guidance voice is outputted immediately before the diverging point is eliminated.

Furthermore, in the case where, although the combination of phrases is altered at the third predetermined distance before the guidance point with the reading of a guidance voice being delayed, the vehicle enters within a fourth predetermined distance without the alteration of the combination of phrases been finished out of the fourth predetermined distance, the guidance voice may be canceled. Doing so, the guidance can be more accurately conducted. Also, the device of the above mentioned embodiment is so designed that the output of the guidance voice starts after the reading of map data has been completed. For example, in the case where map data is divided into a plurality of areas in advance and stored in the storage means for each black. when the output of the guidance voice is requested while the map data is being read, even though all the map data to be read is not read, the reading of map data may be suspended in a block unit so that the output of the guidance voice is executed.

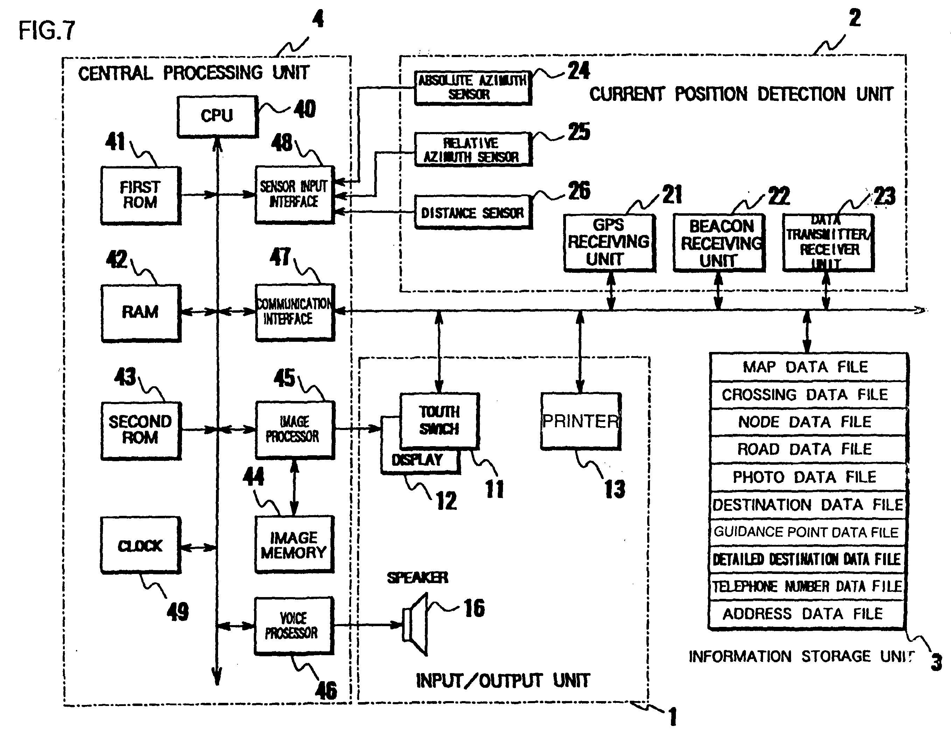

FIG. 7 is a block diagram showing a structural example of the entire system of the vehicle navigation device to which the present invention is applied. The vehicle navigation device to which the present invention is applied is made up of, as shown in FIG. 7, an input/output unit 1 for inputting/outputting information relating to a route guidance, a current position detection unit 2 for detecting information relating to the current position of a vehicle, an information storage unit 3 in which the navigation data necessary for calculating a route and the display guidance data necessary for a leading guidance are recorded, and a central processing unit 4 for executing a route retrieval processing and a display guidance processing necessary for the route guidance and for controlling the entire system. First, the respective structural components will be described.

The input/output unit 1 has functions of inputting a destination, of instructing the central processing unit 4 to execute a navigation processing in accordance with the intention of the driver so that guidance information can be outputted through a voice and/or a screen when it is required by the driver, and of printing data as processed. As means for realizing those functions, the input section has a touch switch 11 or an operating switch used for inputting a destination through a telephone number or coordinates on a map and for requesting a routance guide. The output section has a display 12 for displaying input data on a screen or for automatically displaying the route guidance on the screen in accordance with a driver's request, and a printer 13 for printing data processed through the central processing unit 4 and data stored in the information storage unit 3, a speaker 16 for outputting the route guidance through a voice, and so on.

The display 12 is made up of a color CRT or a color liquid - crystal display. The display 12 displays, with colors, all the screen necessary for navigation, such as a route setting screen, a section picture screen or a crossing picture screen based on map data and guidance data processed by the central processing unit 4, and displays buttons used for executing the operation of setting the route guidance on a main screen, of guiding during the route leading, and of changing over the screen. In particular, the passed crossing information such as a passed crossing name is color-displayed on a section picture screen in a pop - up fashion at all times.

The display 12 is installed within an instrument panel in the vicinity of a driver's seat, and the driver recognizes the current location of his vehicle by viewing a section picture, and also can obtain information relating to the coming route. The display 12 is provided with a touch panel 11 corresponding to the display of function buttons, and so designed that the above mentioned operation is executed on the basis of a signal inputted by touching the buttons. An input signal generation means made up of the buttons, the touch switch and so on constitutes the input section, but its detailed description will be omitted.

The current position detection unit 2 is made up of a GPS receiving unit 21 using the satellite navigation system (GPS = global positioning system), a beacon receiving unit 22, a data transmitter/receiver unit 23 that receives a correction signal of GPS, for example, using a cellular phone or an FM multiple signal, an absolute azimuth sensor 24 consisting of a geomagnetic sensor and so on, a relative azimuth sensor 25 consisting of a vehicle wheel sensor, a steering sensor, a gyro and so on, a distance sensor 26 for detecting a running distance from the rotational speed of the wheel, and so on.

The information storage unit 3 is a data base that stores therein all the data necessary for the navigation device, consisting of files of map data, crossing data, node data, road data, photo data destination point data, guidance point data detailed destination data, telephone number data, address data, etc., necessary for route leading. In this example, the voice data for a route guidance is contained, for example, in the guidance point data.

The central processing unit 4 includes : a CPU 40 for executing an arithmetic operational processing ; a first ROM 41 that stores therein a program used for executing processings such as a route retrieval, a program used for conducting a display output control necessary for the route guidance and a voice output control necessary for the voice guidance, and the data necessary for those programs ; a RAM 42 that temporarily stores therein retrieval route guidance information such as the point coordinates of a destination that has been set or a road surface code No., and the data which is being arithmetically processed ; a second ROM 43 that stores therein display information data necessary for the route guidance and the map display ; an image memory 44 that stores therein image data which is displayed on a screen of the display ; an image processor 45 that takes out the image data from the image memory 44 on the basis of a display output control signal from the CPU 40, subjects the image data to an image processing and outputs it to the display; a voice processor 46 that outputs to the speaker 16 the route guidance voice data read out from the information storage unit 3 as it is, on the basis of the voice output control signal from the CPU ; a communication interface 47 that conducts the delivery of input/output data on communication : a sensor input interface 48 for taking in the sensor signal of the current position detection unit 2 ; a clock 49 for writing date and time to an internal program information ; and so on. In this example, the route guidance is organized so that the driver can select any one of a screen display and a voice output.

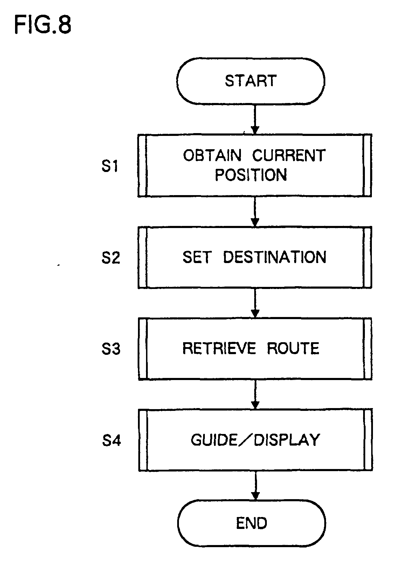

Subsequently, the operation of the above - mentioned navigation device will be described. FIG. 8 is a flow chart for explaining an example of the operating flow of the entire system of the vehicle navigation device.

The CPU of the central processing unit 4 permits the program of the route guidance system to start. Then, as shown in FIG. 8, a current position is first detected by the current position detection unit 2, and the peripheral map with the center of the current position as well as the name of the current position, etc., are displayed (Step S1). Then, a destination and a passing point are set using a telephone number, an address, a facilities name, a registered point and so on (Step S2), and a route from the current position to the destination or a route passing through the passing point is retrieved (Step S3). Upon determination of the route, the route guidance using a guidance voice and the route display are repeatedly executed until the vehicle reaches the destination while the current position is pursued by the current position detection unit 2 (Step S4). In the case where the setting of a side route is inputted before the vehicle reaches the destination, a retrieval area is set, and retrieval is again conducted in the retrieval area. Likewise, the above - mentioned route guidance is repeatedly conducted until the vehicle reaches the destination.

It should be noted that the present invention is not limited by or to the above mentioned embodiments and can be variously modified. For example, in the above mentioned embodiments, the information storage unit 3 is designed as a CD - ROM that stores a variety of data therein. Similarly, the same operation can be applied even to the case using other storage means such as a floppy disc. an IC card or the like. Also, in the processing of Step S40 shown in FIG. 6, in order to alter the combination of phrases, priority or weight is given to the phrases of a guidance voice at a plurality of steps. The highest priority is given to the progressive direction such as "turn to the right" or "turn to the left", and a remaining distance is set as variable up to a predetermined value. Other phrases may be sequentially removed in accordance with the priority as the remaining distance is shortened.

The foregoing description of preferred embodiments of the invention has been presented for purposes of illustration and description. It is not intended to be exhaustive or to limit the invention to the precise forms disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. A vehicle navigation device that provides guidance on a route with a voice in accordance with a preset route, which comprises:
storage means (3) for storing data such as data relating to a map and route guidance voice data necessary for conducting navigation;
read means (17) for reading out the route guidance voice data from said storage means (3);
voice output means (16) for outputting the route guidance voice data read out by said read means as guide voice;
input means (11) for inputting information as to setting or instructing about the route guidance;
current position detection means (2) for detecting the current position of the vehicle;
control means (4) including route setting means (4a) for setting a route from the current position to a destination, route storage means (4b) for temporarily storing a route that has been set, and voice data editing means (4c) for editing the combination of phrases of the route guidance voice data relating to a crossing, a diverging point, etc., on the basis of the route stored in said route storage means (4b), said control means controlling said read means (17) so that said read means sequentially reads out the voice data from said storage means (3) and outputs the voice data that have been read out at a predetermined distance before a guidance point representing an object for guidance on the basis of said combination of phrases;
**characterized in that** said read means (17) is adapted for directly reading out the route guide voice data from said storage means (3), and said control means (4) judges a completion of output for each phrase and controls said read means (17) so that said read means reads out the next phrase after the completion of a previous phrase output.

2. A vehicle navigation device as claimed in claim 1, wherein said control means (4) also inhibits the execution of another processing until the output of the voice data has been completed when another processing execution instruction is given to said control means while the route guidance voice data is being outputted.

3. A vehicle navigation device as claimed in claim 1 or 2, wherein said control means (4) inhibits the voice data from being read out when another processing is being executed in such a situation where the voice data should be read out and outputted at a predetermined distance before said guidance point, and reads out and outputs the voice data after judging the completion of the other processing.

4. A vehicle navigation device as claimed in claim 3, wherein said voice data to be read out and outputted after the completion of said another processing may be the combination of phrases edited by the voice data editing means (4c) in advance.

5. A vehicle navigation device as claimed in claim 3, wherein said voice data to be read out and outputted after the completion of said another processing may be the voice data reedited by guidance voice alteration means (4d).

6. A vehicle navigation device as claimed in claim 5, wherein said voice data to be read out and outputted after the completion of said another processing may be the voice data reedited on the basis of the current position of the vehicle at the time of the completion of the other processing.

7. A vehicle navigation device as claimed in claim 5 or 6, wherein said route guidance voice data is the data to which priority is given, and said guidance voice alteration means (4d) alters the data to the route guidance voice data consisting of phrases high in priority.

## Patentansprüche

1. Fahrzeugnavigationsanlage, die eine Leitung auf einer Route durch Sprache entsprechend einer vorher eingestellten Route bereitstellt und aufweist:
eine Speichereinrichtung (3) zum Speichern von Daten, wie Daten im Zusammenhang mit einer Karte und Routenleitsprachdaten, die zur Navigationsdurchführung notwendig sind;
eine Leseeinrichtung (17) zum Auslesen der Routenleitsprachdaten aus der Speichereinrichtung (3);
eine Sprachausgabeeinrichtung (16) zum Ausgeben der durch die Leseeinrichtung ausgelesenen Routenleitsprachdaten als Sprachleitung;
eine Eingabeeinrichtung (11) zum Eingeben von Informationen über Einstellungen oder Anweisungen für die Routenleitung;
eine Erfassungseinrichtung (2) für aktuelle Positionen zum Erfassen der aktuellen Position des Fahrzeugs;
eine Steuereinrichtung (4) mit: einer Routeneinstelleinrichtung (4a) zum Einstellen einer Route von der aktuellen Position zu einem Ziel, einer Routenspeichereinrichtung (4b) zum Zwischenspeichern einer eingestellten Route und einer Sprachdaten-Editiereinrichtung (4c) zum Editieren der Phrasenkombination der Routenleitsprachdaten im Zusammenhang mit einer Kreuzung, einer Abzweigung usw. auf der Grundlage der in der Routenspeichereinrichtung (4b) gespeicherten Route, wobei die Steuereinrichtung die Leseeinrichtung (17) so steuert, daß die Leseeinrichtung die Sprachdaten aus der Speichereinrichtung (3) nacheinander ausliest und die ausgelesenen Sprachdaten in einer vorbestimmten Distanz vor einem Leitpunkt, an dem eine Leitung erfolgen soll, auf der Grundlage der Phrasenkombination ausgibt;
**dadurch gekennzeichnet, daß** die Leseeinrichtung (17) zum direkten Auslesen der Routenleitsprachdaten aus der Speichereinrichtung (3) geeignet ist und die Steuereinrichtung (4) einen Ausgabeabschluß für jede Phrase beurteilt und die Leseeinrichtung (17) so steuert, daß die Leseeinrichtung die nächste Phrase nach dem Abschluß einer vorhergehenden Phrasenausgabe ausliest.

2. Fahrzeugnavigationsanlage nach Anspruch 1, wobei die Steuereinrichtung (4) auch die Durchführung einer anderen Verarbeitung sperrt, bis die Ausgabe der Sprachdaten abgeschlossen ist, wenn der Steuereinrichtung eine Anweisung zur Durchführung einer anderen Verarbeitung erteilt wird, während die Routenleitsprachdaten gerade ausgegeben werden.

3. Fahrzeugnavigationsanlage nach Anspruch 1 oder 2, wobei die Steuereinrichtung (4) das Auslesen der Sprachdaten sperrt, wenn gerade eine andere Verarbeitung in einer solchen Situation durchgeführt wird, in der die Sprachdaten in einer vorbestimmten Distanz vor dem Leitpunkt ausgelesen und ausgegeben werden sollten, und die Sprachdaten nach Beurteilung des Abschlusses der anderen Verarbeitung ausliest und ausgibt.

4. Fahrzeugnavigationsanlage nach Anspruch 3, wobei die nach dem Abschluß der anderen Verarbeitung auszulesenden und auszugebenden Sprachdaten die Phrasenkombination sein können, die durch die Sprachdaten-Editiereinrichtung (4c) vorab editiert wurde.

5. Fahrzeugnavigationsanlage nach Anspruch 3, wobei die nach dem Abschluß der anderen Verarbeitung auszulesenden und auszugebenden Sprachdaten die Sprachdaten sein können, die durch eine Sprachleitungs-Änderungseinrichtung (4d) neu editiert wurden.

6. Fahrzeugnavigationsanlage nach Anspruch 5, wobei die nach dem Abschluß der anderen Verarbeitung auszulesenden und auszugebenden Sprachdaten die Sprachdaten sein können, die auf der Grundlage der aktuellen Position des Fahrzeugs beim Abschluß der anderen Verarbeitung neu editiert wurden.

7. Fahrzeugnavigationsanlage nach Anspruch 5 oder 6, wobei die Routenleitsprachdaten die Daten sind, denen Priorität zugeordnet ist, und die Sprachleitungs-Änderungseinrichtung (4d) die Daten in Routenleitsprachdaten ändert, die aus Phrasen mit hoher Priorität bestehen.

## Revendications

1. Dispositif de navigation pour véhicule qui fournit un guidage sur un itinéraire avec un voix selon un itinéraire préétabli, qui comprend :
un moyen de stockage (3) pour stocker des données telles que des données concernant une carte et des données de voix de guidage d'itinéraire nécessaires pour conduire la navigation;
un moyen de lecture (17) pour lire les données de voix de guidage d'itinéraire dans le moyen de stockage (3);
un moyen de sortie vocale (16) pour émettre les données de voix de guidage d'itinéraire lues par ledit moyen de lecture en tant que voix de guidage;
un moyen d'entrée (11) pour entrer des informations concernant l'établissement ou l'instruction du guidage d'itinéraire;
un moyen de détection (2) de position actuelle pour détecter la position actuelle du véhicule;
un moyen de commande (4) comportant un moyen d'établissement d'itinéraire (4a) pour établir un itinéraire depuis la position courante jusqu'à une destination, un moyen de stockage d'itinéraire (4b) pour stocker temporairement un itinéraire qui a été établi, et un moyen de données de voix (4c) pour éditer la combinaison de phrases des données de voix de guidage d'itinéraire concernant un croisement, un point de diversion, etc., en se basant sur l'itinéraire stocké dans ledit moyen de stockage d'itinéraire (4b), ledit moyen de commande commandant ledit moyen de lecture (17) de sorte que ledit moyen de lecture lit séquentiellement les données de voix dudit moyen de stockage (3) et produit les données de voix qui ont été lues à une distance déterminée au préalable avant un point de guidage représentant un objet pour le guidage en se basant sur ladite combinaison de phrases;
**caractérisé en ce que** ledit moyen de lecture (17) est adapté pour lire directement les données de voix de guidage d'itinéraire dudit moyen de stockage (3), et ledit moyen de commande (4) analyse un achèvement de sortie pour chaque phrase et commande ledit moyen de lecture (17) de façon que ledit moyen de lecture lise la phrase suivante après l'achèvement d'une précédente phrase émise.

2. Dispositif de navigation pour véhicule selon la revendication 1, dans lequel ledit moyen de commande (4), également, inhibe l'exécution d'un autre traitement jusqu'à ce que la sortie des données de voix a été achevée lorsqu'une autre instruction d'exécution de traitement est donnée audit moyen de commande tandis que lesdites données de voix de guidage d'itinéraire sont en train d'être émises.

3. Dispositif de navigation pour véhicule selon la revendication 1 ou 2, dans lequel ledit moyen de commande (4) empêche les données de voix d'être lues lorsqu'un autre traitement est en cours d'exécution dans une situation où les données de voix devraient être lues et émises à une distance déterminée au préalable avant ledit point de guidage, et lit et émet les données de voix après avoir jugé l'achèvement de l'autre traitement.

4. Dispositif de navigation pour véhicule selon la revendication 3, dans lequel lesdites données de voix à lire et à émettre après l'achèvement dudit autre traitement peuvent être la combinaison de phrases éditées par le moyen d'édition de données (4c) à l'avance.

5. Dispositif de navigation pour véhicule selon la revendication 3, dans lequel lesdites données de voix à lire et à émettre après l'achèvement dudit autre traitement peuvent être les données de voix rééditées par un moyen d'altération de voix de guidage (4d).

6. Dispositif de navigation pour véhicule selon la revendication 5, dans lequel lesdites données de voix à lire et à émettre après l'achèvement dudit autre traitement peuvent être les données de voix rééditées en se basant sur la position actuelle du véhicule au moment de l'achèvement de l'autre traitement.

7. Dispositif de navigation pour véhicule selon la revendication 5 ou 6, dans lequel lesdites données de voix de guidage d'itinéraire sont les données auxquelles priorité est donnée, et ledit moyen d'altération de voix de guidage (4d) altère les données aux données de voix de guidage d'itinéraire consistant en des phrases à priorité élevée.
